# EUROPÄISCHE PATENTSCHRIFT

(11) **EP 1 236 892 B1**
(45) Veröffentlichungstag und Bekanntmachung des Hinweises auf die Patenterteilung: **17.09.2003**
(21) Anmeldenummer: 02001539.2
(22) Anmeldetag: 23.01.2002
(51) Int. Cl.: F03D 11/00, F03D 1/06

(54) **Windkraftanlage mit einer Einrichtung zur Hindernisbefeuerung bzw. Nachtkennzeichnung**
Wind power plant with a devise to mark the night
Eolienne avec un dispositiv pour marguer le nuit

(30) Priorität: 26.01.2001 DE 10103387
(43) Veröffentlichungstag der Anmeldung: 04.09.2002
(73) Patentinhaber: Nordhoff, Thorsten, 27570 Bremerhaven (DE)
(72) Erfinder: Nordhoff, Thorsten, 27570 Bremerhaven (DE)
(74) Vertreter: Siekmann, Gunnar, Dipl.-Phys.

(56) Entgegenhaltungen:
- DE-U- 20 015 183

## Beschreibung

Die Erfindung betrifft eine Windkraftanlage mit einer Einrichtung zur Hindernisbefeuerung bzw. Nachtkennzeichnung und mit wenigstens einem einer Rotornabe zugeordneten Rotorblatt.

Alle hohen Bauwerke bilden potentielle Gefahrenquellen für den Flugverkehr. Um Unfälle zu vermeiden, werden hohe Bauwerke für den Flugverkehr bei schlechten Sichtverhältnissen, insbesondere für den Flugverkehr bei Dunkelheit, mit einer Hindernisbefeuerung bzw. Nachtkennzeichnung ausgestattet. Aufgrund ihrer Bauhöhe gehören auch Windkraftanlagen zu den potentiellen Gefahrenquellen für den Flugverkehr und müssen deshalb mit einer Hindernisbefeuerung bzw. Nachtkennzeichnung ausgestattet werden.

Um eine maximale Sicherheit zu erzielen, ist es entscheidend, die Einrichtung zur Hindernisbefeuerung bzw. Nachtkennzeichnung möglichst nahe an dem höchsten Punkt eines Bauwerks anzuordnen, vorzugsweise jedoch in einer Höhe, in der die Einrichtung zur Hindernisbefeuerung bzw. Nachtkennzeichnung selbst den höchsten Punkt des Bauwerks bildet.

Aus der DE 200 08 289 U1 und der DE 200 15 183 U1 sind Windkraftanlagen mit einer Einrichtung zur Hindernisbefeuerung bzw. Nachtkennzeichnung bekannt. Sie weisen in einem jeweiligen Gefahrenbereich angeordnete, elektrisch betriebene Leuchten auf.

Die Druckschrift G 93 02 798.2 U1 beschreibt ein als Warneinrichtung für den Flugverkehr dienendes Hindernisfeuer, dessen Lichtaustrittskörper über ein Lichtwellenleiterbündel und optische Hilfsmittel an eine räumlich entfernt angeordnete Lichtquelle angeschlossen ist. Der Lichtaustrittskörper ist auf einem Flughafen- oder Strommast, auf einem Schornstein oder auf einem Fernmeldeturm befestigt und ist als rotationssymmetrischer, eine Rundum-Abstrahl-Charakteristik aufweisender Träger ausgebildet.

Bei Windkraftanlagen hat sich jedoch die Anordnung derartiger Einrichtungen zur Hindernisbefeuerung bzw. Nachtkennzeichnung als problematisch erwiesen, da sich der höchste Punkt am äußeren Ende der rotierenden Rotorflügel befindet. Die Problematik liegt in dem Erfordernis einer insgesamt wartungsarmen Energieversorgung der an den rotierenden Rotorflügeln angeordneten Leuchten und zum anderen in einer Anbringung der Leuchten bzw. der Lichtaustrittskörper an die Rotorflügel, bei der die Belastbarkeit und die Aerodynamik des einzelnen Rotorflügels möglichst wenig beeinträchtigt ist.

Bei in oder an den Rotorblättern angeordneten elektrischen Einrichtungen besteht erhöhte Blitzschlaggefahr. Außerdem erfordert eine Versorgung von an oder in den Rotorblättern angeordneten Leuchten mit elektrischem Strom entweder den Einsatz wartungsintensiver Schleifkontakte zwischen der Rotoraufnahme und einem in der Rotoraufnahme drehbar gelagerten Rotor, oder die Anordnung von Akkumulatoren am Rotor. Diese sind jedoch aufgrund ihres relativ hohen Gewichts denkbar ungeeignet für die Anordnung an oder in den Rotorblättern. Außerdem würde das Auswechseln verbrauchter Akkumulatoren jedesmal einen Stillstand des Rotors erfordern.

Der Erfindung liegt die Aufgabe zugrunde, eine Windkraftanlage der eingangs genannten Gattung aufzuzeigen, deren Rotorblättern eine besonders effizient arbeitende Einrichtung zur Hindernisbefeuerung bzw. Nachtkennzeichnung zugeordnet ist.

Diese Aufgabe ist erfindungsgemäß mit einer Windkraftanlage mit den Merkmalen des Patentanspruchs 1 gelöst. Vorteilhafte Weiterbildungen der Erfindung sind in den Unteransprüchen angegeben.

Die Windkraftanlage zeichnet sich dadurch aus, daß das Rotorblatt wenigstens einen Lichtwellenleiter aufweist, daß der Lichtwellenleiter vom nabenseitigen Endbereich des Rotorblattes zu der Rotorblattoberfläche geführt ist, und daß dem Lichtwellenleiter im nabenseitigen Endbereich des Rotorblattes eine Lichtquelle zugeordnet ist.

Eine derartige Ausgestaltung ermöglicht die Übertragung von Lichtwellen vom nabenseitigen Endbereich des Rotorblattes in jeden beliebigen Bereich des Rotorblattes. Ein Vorteil der im nabenseitigen Endbereich des Rotorblattes angeordneten Lichtquelle liegt darin, daß eine gleichzeitige Zuordnung der Lichtquelle zu jedem einzelnen Rotorblatt möglich ist. Die Lichtquelle kann entweder am Rotor selbst oder an nicht rotierenden Maschinenteilen des Turmkopfes angeordnet sein. Letzteres hat den Vorteil, daß keine Schleifkontakte oder Akkumulatoren zur Versorgung des Rotors mit elektrischer Energie erforderlich sind.

Es ist von erfindungswesentlicher Bedeutung, daß der Lichtwellenleiter durch das Innere des Rotorblattes geführt ist, um die aerodynamischen Strömungsverhältnisse am Strömungsprofil nicht negativ zu beeinflussen.

Nach einer Weiterbildung der Erfindung ist der Lichtwellenleiter aus einem Lichtleitkabel ausgebildet. Derartige Lichtleitkabel weisen ein Bündel flexibler Lichtleitfasern auf, die mit einer Kunststoffummantelung geschützt und zusammengehalten sind. Die aus Glasfasern bestehenden Lichtleitkabel kommen in vielen Bereichen der Technik zum Einsatz, was den Vorteil hat, daß der Handel Lichtleitkabel in großer Auswahl anbietet.

Nach einer weiteren Weiterbildung der Erfindung weist das Lichtleitkabel wenigstens eine Splitstelle auf, in der das Lichtleitfaserbündel zur der Rotorblattoberfläche hin in Teilbündel aufgesplitet ist. Durch eine derartige Ausgestaltung können die Lichtwellen in verschiedene Teilbereiche eines Rotorblattes geleitet werden. Die Splitstelle ist vorzugsweise im Bereich der Rotorblattspitze angeordnet, da dieser Bereich bei drehendem Rotor die maximale Höhe der Windkraftanlage bildet und ihm somit die größte Bedeutung für die Hindernisbefeuerung zukommt.

Weiterhin ist jedem in der Rotorblattoberfläche liegenden Ende der Lichtleitfaser-Teilbündel ein System zur Lichtleitstrahlenbeeinflussung zugeordnet. Ein derartiges System richtet und ordnet die diffus aus den Lichtleitfasern austretenden Lichtwellen zu Lichtstrahlen mit vorbestimmbarer Streuung und Strahlungsrichtung.

Vorzugsweise weist das System zur Lichtstrahlenbeeinflussung Spiegel oder Prismen auf. Durch die Kombination von Spiegeln und Prismen miteinander können die Lichtstrahlen in nahezu beliebiger Weise beeinflußt werden.

Es liegt im Rahmen der Erfindung, daß das System zur Lichtstrahlenbeeinflussung beliebig komplex ausführbar ist, um beispielsweise besonders wirkungsvolle Beleuchtungseffekte an den in verschiedenen Geschwindigkeiten rotierenden Rotorblättern zu erzielen.

Nach einer Weiterbildung der Erfindung weist das Rotorblatt ein Hohlkörperprofil auf, das aus wenigstens einem in radialer Richtung verlaufenden Steg und einem den Steg umschließenden, die Rotorblattoberfläche aufweisenden Gurt ausgebildet ist. Da insbesondere größere Windkraftanlagen Einrichtungen zur Hindernisbefeuerung bzw. Nachtkennzeichnung benötigen, bietet das Hohlkörperprofil verschiedene Möglichkeiten der Verlegung bzw. Anordnung der Lichtleitkabel in dem Rotorblatt. Das Lichtleitkabel kann beispielsweise an den Innenflächen des Hohlkörperprofils entlanggeführt sein. Denkbar ist auch, daß das Lichtleitkabel im Steg oder Gurt integriert ist. Eine derartige Integration kann bereits Teil des Fertigungsprozesses eines Rotorflügels sein und hat den Vorteil, daß die Lichtleitkabel besonders geschützt im Rotorblatt geführt sind. Weiterhin ist es möglich, Stege und Gurte ganz oder teilweise aus glasfaserverstärkten Kunststoffen mit lichtleitenden Eigenschaften auszubilden.

Bevorzugt ist die Lichtquelle an nicht rotierenden, ortsfesten Maschinenteilen des Turmkopfes angeordnet, so daß sich die nabenseitigen Endbereiche der Rotorblätter um diese ortsfeste stationäre Lichtquelle drehen. Dazu sind bevorzugt an den Endbereichen der Rotorblätter Lichtaufnahmeflächen angeordnet, die mit den Lichtwellenleitern in den Rotorblättern verbunden sind.

In einer besonders vorteilhaften Ausgestaltung der Erfindung weist die Einrichtung zur Hindernisbefeuerung bzw. Nachtkennzeichnung eine Steuereinheit zum Steuern der Lichtquelle auf. Die Steuereinheit bietet eine weitere Möglichkeit, wirkungsvolle Effekte an den rotierenden Rotorblättern zu erzielen. Es ist beispielsweise denkbar, daß die Lichtquelle eine Einrichtung zur Lichtwellenlängenänderung aufweist, die der Steuerung verschiedener Lichtfarben dient. Eine andere Möglichkeit besteht darin, daß für die Lichtquelle eine Art Projektor zum projezieren von Bildern vorgesehen ist, und die Bilder über einen Lichtleitfaserstrang auf eine in der Rotorblattoberfläche integrierte Werbefläche übertragbar sind. Die Werbefläche ist dabei aus einer Vielzahl von Lichtpunkten ausgebildet, wobei jedem Lichtpunkt mindestens eine Lichtleitfaser zugeordnet ist. Derartige Werbeflächen können beispielsweise Werbeslogans oder Schriftzüge in Form von Markennamen ausstrahlen. Ein bedeutender Vorteil liegt darin, die Amortisierungszeiten derartiger Windkraftanlagen durch Werbeeinnahmen zu verkürzen.

Nach einer Weiterbildung der Erfindung sind die Rotorblätter derart ausgestaltet, daß auch ältere Windkraftanlagen mit ihnen nachrüstbar sind. Die Bereitstellung eines für eine derartige Windkraftanlage angepaßten Rotorblattes stellt einen weiteren wesentlichen Aspekt der Erfindung dar.

Ein Ausführungsbeispiel der Erfindung, aus dem sich weitere erfinderische Merkmale ergeben, ist in der Zeichnung dargestellt. Es zeigen:
- Fig. 1: eine Draufsicht einer erfindungsgemäßen Windkraftanlage;
- Fig. 2: eine Ansicht im Längsschnitt entlang der Linie A-A (siehe Fig. 3) eines Rotorblattes der erfindungsgemäßen Windkraftanlage;
und
- Fig. 3: eine perspektivische Ansicht einer quer geschnittenen Rotorblattspitze der erfindungsgemäßen Windkraftanlage gemäß eines ersten Ausführungsbeispiels,
und
- Fig. 4: eine perspektivische Ansicht einer quer geschnittenen Rotorblattspitze der erfindungsgemäßen Windkraftanlage gemäß eines zweiten Ausführungsbeispiels.

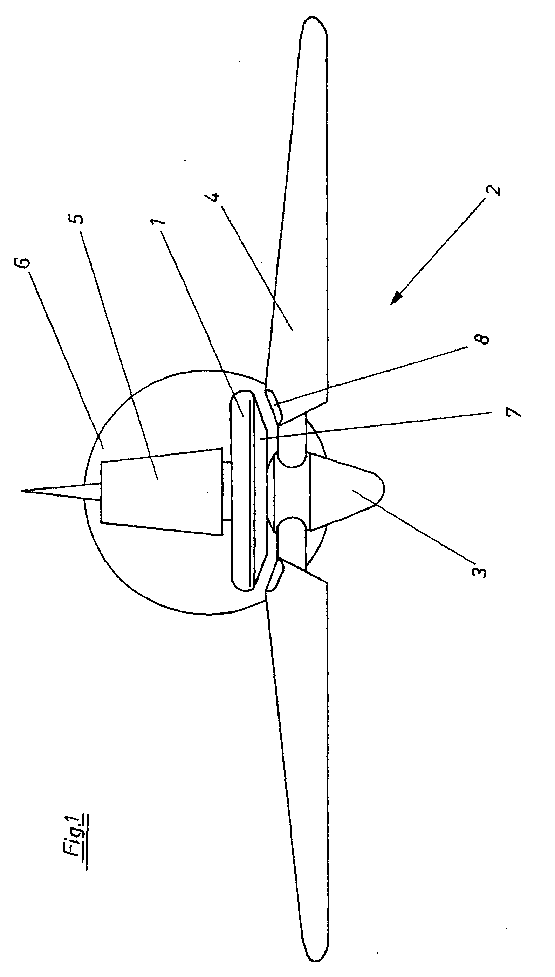

Fig. 1 zeigt eine Draufsicht einer erfindungsgemäßen Windkraftanlage mit einer Lichtanlage 1 zur Hindernisbefeuerung bzw. Nachtkennzeichnung und mit einem Rotor 2 bestehend aus drei einer Rotornabe 3 zugeordneten Rotorblättern 4. Der Rotor 2 bildet den Antrieb eines im Maschinenhaus 5 angeordneten Generators. Das Gehäuse des Maschinenhauses 5 ist auf dem Turm 6 angelenkt. Die eine ringförmige Gestalt aufweisende Lichtanlage 1 ist auf einer Hauptwelle zwischen dem Rotor 2 und dem Maschinenhaus 5 angeordnet. Die Lichtanlage 1 ist mit ihrer ebenfalls eine ringförmige Gestalt aufweisenden Lichtquelle 7 auf der Hauptwelle zentrisch angeordnet. Jedes Rotorblatt 4 weist in seinem nabenseitigen Endbereich eine Lichtaufnahmefläche 8 auf, die der ringförmigen Lichtquelle 7 zugeordnet ist. Es ist wichtig, daß der Lichtanlage 1 Kupplungen zugeordnet sind, mit denen sie entweder an das in statischer Ruhelage befindliche Gehäuse des Maschinenhauses 5 gekuppelt wird oder an den sich drehenden Rotor 2. Daraus ergibt sich, daß die Lichtaufnahmeflächen 8 an der ringförmigen Lichtquelle 7 auf einer Kreisbahn ablaufen, oder daß die Lichtaufnahmeflächen 8 einem bestimmten Bereich der ringförmigen Lichtquelle 7 zugeordnet sind.

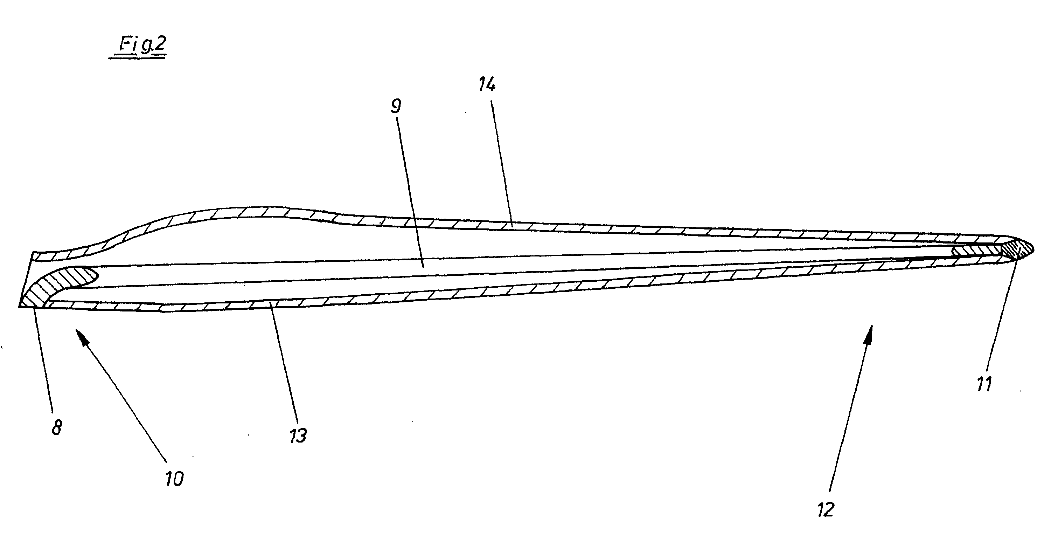

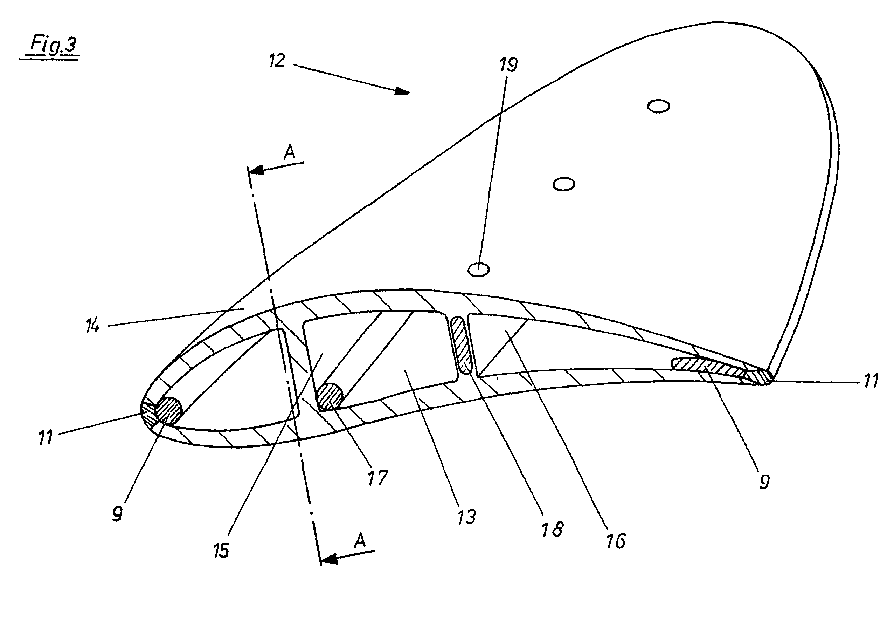

Fig. 2 zeigt eine Ansicht im Längsschnitt entlang der Linie A-A (siehe Fig. 3) eines Rotorblattes der erfindungsgemäßen Windkraftanlage. Ein Lichtleitkabel 9 ist vom nabenseitigen Bereich 10 entlang der Rotorblattkante 11 in die Rotorblattspitze 12 geführt. Die Rotorblattkante 11 wird durch den Zusammenstoß eines unteren Gurtes 13 mit einem oberen Gurt 14 gebildet. Das im nabenseitigen Endbereich 10 liegende Ende des Lichtleitkabels 9 weist die Lichtaufnahmefläche 8 auf. Die Rotorblattkante 11 ist vorzugsweise aus einem transparente Eigenschaften aufweisenden Material ausgebildet. Das Lichtleitkabel 9 ist der Rotorblattkante 11 derart zugeordnet, daß Lichtwellen aus dem Lichtleitkabel 9 durch die transparente Eigenschaften aufweisende Rotorblattkante 11 in den freien Raum gelangen können. Die Rotorblattkante 11 weist vorzugsweise Funktionen eines Spiegels und/oder Prismas auf, mit denen sie das diffus aus dem Lichtleitkabel 9 austretende Licht in vorbestimmter Richtung und Streuung in den freien Raum abstrahlen kann.

Fig. 3 zeigt eine perspektivische Ansicht einer quergeschnittenen Rotorblattspitze der erfindungsgemäßen Windkraftanlage gemäß eines ersten Ausführungsbeispiels. Die Rotorblattspitze zeigt ein Rotorblattprofil mit einem vorderen Steg 15 und einem hinteren Steg 16, die den unteren Gurt 13 mit dem oberen Gurt 14 verbinden. Das Lichtleitkabel 9 ist der transparente Eigenschaften aufweisenden Rotorblattkante 11 zugeordnet. Ein zweites Lichtleitkabel 17 ist in der Innenkante zwischen dem unteren Gurt 13 und dem vorderen Steg 15 angeordnet. Ein derartig angeordnetes Lichtleitkabel 17 ist vorzugsweise für die Versorgung der Außenflächen des unteren Gurtes 13 bzw. des oberen Gurtes 14 vorgesehen.

Der hintere Steg 16 weist ein in ihm integriertes Lichtleitkabel 18 auf. Die Integration des Lichtleitkabels 18 in das Rotorblattprofil hat den Vorteil, daß es dadurch geschützt und lagefest angeordnet ist. Die von dem Lichtleitkabel 18 mit Licht zu versorgenden Bereiche sind vorzugsweise ebenfalls die Außenflächen der Gurte 13, 14.

Zur abschnittsweisen Beleuchtung der die Rotorblattoberfläche bildenden Gurte 13, 14 weisen diese lichtdurchlässige Elemente 19 auf, denen jeweils ein Teil der ein Lichtleitkabel 9, 17, 18 bildenden Lichtleitfasern zugeordnet ist. Vorzugsweise weisen die lichtdurchlässigen Elemente 19 Funktionen eines Spiegels und/oder eines Prismas auf, mit denen das diffuse Licht aus den Lichtleitkabeln 9, 17, 18 in geordnete Lichtstrahlen mit vorbestimmter Richtung, Aufweitung und Streuung umgewandelt wird.

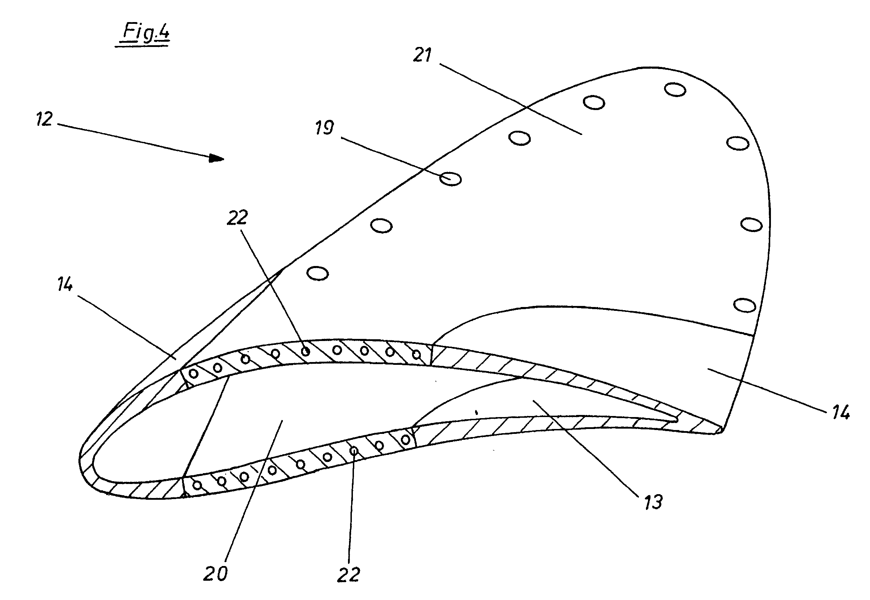

Fig. 4 zeigt eine perspektivische Ansicht einer quergeschnittenen Rotorblattspitze der erfindungsgemäßen Windkraftanlage gemäß eines zweiten Ausführungsbeispiels. Die Rotorblattspitze 12 weist zwei Einlegebereiche 20, 21 auf. Der untere Einlegebereich 20 ist Teil des unteren Gurtes 13, und der obere Einlegebereich 21 ist Teil des oberen Gurtes 14. Die Einlegebereiche 20, 21 weisen in ihren Faserwerkstoff integrierte Lichtleitfaser-Teilbündel 22 auf. Jedes Lichtleitfaser-Teilbündel 22 führt zu einem lichtdurchlässigen Element 19, das in den Oberflächen der Einlegebereiche 20, 21 angeordnet ist. Die integrierten Lichtleitfaser-Teilbündel 22 resultieren aus einer im vorderen Bereich des Rotorblattes angeordneten Schnittstelle, in der sich ein großes Lichtleitkabel in mehrere Lichtleitfaser-Teilbündel aufsplittet. Vorzugsweise sind die Lichtleitfasern jedes integrierten Lichtleitfaser-Teilbündels 22 einem definierten Bereich der Lichtaufnahmefläche 8 (siehe Fig. 1, 2) zugeordnet.

## Patentansprüche

1. Windkraftanlage mit einer Einrichtung zur Hindernisbefeuerung bzw. Nachtkennzeichnung und mit wenigstens einem einer Rotornabe zugeordneten Rotorblatt,
**dadurch gekennzeichnet,**
**daß** das Rotorblatt (4) wenigstens einen Lichtwellenleiter aufweist, daß der Lichtwellenleiter vom nabenseitigen Endbereich (10) des Rotorblattes (4) zu der Rotorblattoberfläche geführt ist, und daß dem Lichtwellenleiter im nabenseitigen Endbereich (10) des Rotorblattes (4) eine Lichtquelle (7) zugeordnet ist.

2. Windkraftanlage nach Anspruch 1, **dadurch gekennzeichnet, daß** der Lichtwellenleiter aus einem Lichtleitkabel (9, 17, 18) ausgebildet ist, das durch das Innere des Rotorblattes (4) geführt ist.

3. Windkraftanlage nach einem der Ansprüche 1 und 2, **dadurch gekennzeichnet, daß** das Lichtleitkabel (9, 17, 18) ein Bündel flexibler Lichtleitfasern aufweist und daß das Lichtleitkabel (9, 17, 18) wenigstens eine Splitstelle aufweist, in der das Lichtleitfaserbündel zu der Rotorblattoberfläche hin in Lichtleitfaser-Teilbündel (22) aufgesplittet ist.

4. Windkraftanlage nach Anspruch 3, **dadurch gekennzeichnet, daß** jedem in der Rotorblattoberfläche liegenden Ende der Lichtleitfaser-Teilbündel ein System zur Lichtstrahlenbeeinflussung zugeordnet ist.

5. Windkraftanlage nach einem der vorhergehenden Ansprüche, **dadurch gekennzeichnet, daß** die Lichtquelle an nicht rotierenden Maschinenteilen des Turmkopfes angeordnet ist.

6. Winkkraftanlage nach einem der vorhergehenden Ansprüche, **dadurch gekennzeichnet, daß** jedem Lichtwellenleiter eine mit der Lichtquelle korrespondierende, im nabenseitigen Endbereich des Rotorblattes angeordnete Lichtaufnahmefläche zugeordnet ist.

7. Windkraftanlage nach einem der vorhergehenden Ansprüche, **dadurch gekennzeichnet, daß** das Rotorblatt (4) ein Hohlkörperprofil aufweist, das aus wenigstens einem in radialer Richtung verlaufenden Steg (15, 16) und einem den Steg (15, 16) umschließenden, die Rotorblattoberfläche aufweisenden Gurt (13, 14) ausgebildet ist.

8. Windkraftanlage nach Anspruch 7, **dadurch gekennzeichnet, daß** das Lichtleitkabel (9, 17, 18) an den Innenflächen des Hohlkörperprofils entlang geführt ist.

9. Windkraftanlage nach einem der Ansprüche 7 und 8, **dadurch gekennzeichnet, daß** das Lichtleitkabel (9, 17, 18) im Steg (15, 16) oder Gurt (13, 14) integriert ist.

10. Windkraftanlage nach einem der vorhergehenden Ansprüche, **dadurch gekennzeichnet, daß** die Einrichtung zur Hindernisbefeuerung bzw. Nachtkennzeichnung eine Steuereinheit zum Steuern der Lichtquelle (7) aufweist.

11. Windkraftanlage nach einem der vorhergehenden Ansprüche, **dadurch gekennzeichnet, daß** in die Rotorblattoberfläche eine Werbefläche integriert ist und daß die Werbefläche aus einer Vielzahl von Lichtpunkten gebildet ist und daß jedem Lichtpunkt wenigstens eine Lichtleitfaser zugeordnet ist.

12. Rotorblatt zur Verwendung in einer Windkraftanlage nach einem der vorhergehenden Ansprüche.

## Claims

1. Wind power plant having a device for obstacle lighting and/or nightime marking, having at least one rotor blade assigned to a rotor hub, **characterized in that** the rotor blade (4) has at least one optical conductor, **in that** the optical conductor is guided from the hub-side end region (10) of the rotor blade (4) to the rotor blade surface, and **in that** a light source (7) is assigned to the optical conductor in the hub-side end region (10) of the rotor blade (4).

2. Wind power plant according to Claim 1, **characterized in that** the optical conductor is constructed from an optical fibre cable (9, 17, 18) which is guided through the interior of the rotor blade (4).

3. Wind power plant according to one of Claims 1 and 2, **characterized in that** the optical fibre cable (9, 17, 18) has a bundle of flexible optical fibres, and **in that** the optical fibre cable (9, 17, 18) has at least one split point in which the optical fibre bundle is split up towards the rotor blade surface into optical fibre subbundles (22).

4. Wind power plant according to Claim 3, **characterized in that** a system for influencing light beams is assigned to each end of the optical fibre subbundles which are situated in the rotor blade surface.

5. Wind power plant according to one of the preceding claims, **characterized in that** the light source is arranged on nonrotating machine parts of the tower head.

6. Wind power plant according to one of the preceding claims, **characterized in that** each optical conductor is assigned a light-receiving face which corresponds to the light source and is arranged in the hub-side end region of the rotor blade.

7. Wind power plant according to one of the preceding claims, **characterized in that** the rotor blade (4) has a hollow body profile which is constructed from at least one web (15, 16) running in a radial direction, and from a belt (13, 14) which surrounds the web (15, 16) and has the rotor blade surface .

8. Wind power plant according to Claim 7, **characterized in that** the optical fibre cable (9, 17, 18) is guided along the inner surfaces of the hollow body profile.

9. Wind power plant according to one of Claims 7 and 8, **characterized in that** the optical fibre cable (9, 17, 18) is integrated in the web (15, 16) or belt (13, 14).

10. Wind power plant according to one of the preceding claims, **characterized in that** the device for obstacle lighting and/or nightime marking has a control unit for controlling the light source (7).

11. Wind power plant according to one of the preceding claims, **characterized in that** an advertising surface is integrated in the rotor blade surface, and **in that** the advertising surface is formed from a multiplicity of light points, and **in that** each light point is assigned at least one optical fibre.

12. Rotor blade for use in a wind power plant according to one of the preceding claims.

## Revendications

1. Eolienne comportant un dispositif de balisage d'obstacles ou balisage de nuit et comportant au moins une pale de rotor associée à un moyeu de rotor, **caractérisée en ce que** la pale de rotor (4) comporte au moins un guide d'ondes lumineuses, **en ce que** le guide d'ondes lumineuses est guidé depuis la zone terminale (10) côté moyeu de la pale de rotor (4) vers la surface de la pale de rotor, et **en ce qu'**une source lumineuse (7) est associée au guide d'ondes lumineuses, dans la zone terminale (10) côté moyeu de la pale de rotor (4).

2. Eolienne selon la revendication 1, **caractérisée en ce que** le guide d'ondes lumineuses est constitué d'un câble optique (9, 17, 18) qui passe à travers l'intérieur de la pale de rotor (4).

3. Eolienne selon l'une des revendications 1 et 2, **caractérisée en ce que** le câble optique (9, 17, 18) comporte un faisceau de fibres optiques flexibles et **en ce que** le câble optique (9, 17, 18) présente au moins un point de division dans lequel le faisceau de fibres optiques menant à la surface de la pale de rotor est divisé en faisceaux partiels de fibres optiques (22).

4. Eolienne selon la revendication 3, **caractérisée en ce qu'**à chaque extrémité des faisceaux partiels de fibres optiques, située dans la surface de pale de rotor, est associé un système destiné à influencer les rayons lumineux.

5. Eolienne selon l'une des revendications précédentes, **caractérisée en ce que** la source lumineuse est disposée sur des parties de machine non rotatives de la tête de la tour.

6. Eolienne selon l'une des revendications précédentes, **caractérisée en ce qu'**à chaque guide d'ondes lumineuses est associée une surface de réception de lumière correspondant à la source lumineuse et disposée dans la zone terminale côté moyeu de la pale de rotor.

7. Eolienne selon l'une des revendications précédentes, **caractérisée en ce que** la pale de rotor (4) comporte un profilé creux qui est constitué d'au moins une âme (15, 16) s'étendant dans la direction radiale et d'une membrure (13, 14) enfermant l'âme (15, 16) et présentant la surface de la pale de rotor.

8. Eolienne selon la revendication 7, **caractérisée en ce que** le câble optique (9, 17, 18) est guidé le long des surfaces intérieures du profilé creux.

9. Eolienne selon l'une des revendications 7 et 8, **caractérisée en ce que** le câble optique (9, 17, 18) est intégré dans l'âme (15, 16) ou la membrure (13, 14).

10. Eolienne selon l'une des revendications précédentes, **caractérisée en ce que** le dispositif de balisage d'obstacles ou balisage de nuit comporte une unité de commande pour commander la source lumineuse (7).

11. Eolienne selon l'une des revendications précédentes, **caractérisée en ce que** dans la surface de la pale de rotor est intégrée une surface publicitaire et **en ce que** la surface publicitaire est constituée d'un grand nombre de points lumineux et **en ce qu'**à chaque point lumineux est associée au moins une fibre optique.

12. Pale de rotor destinée à être utilisée dans une éolienne selon l'une des revendications précédentes.
